# EUROPEAN PATENT SPECIFICATION

(11) **EP 2 266 291 B1**
(45) Date of publication and mention of the grant of the patent: **05.09.2018**
(21) Application number: 08718114.5
(22) Date of filing: 20.03.2008
(51) Int. Cl.: H04L 29/06

(54) **DIFFERENT IP INTERFACES IN A COMMUNICATION NETWORK SYSTEM**
VERSCHIEDENE IP-SCHNITTSTELLEN IN EINEM KOMMUNIKATIONSNETZSYSTEM
INTERFACES IP DIFFÉRENTES DANS UN SYSTÈME DE RÉSEAU DE COMMUNICATION

(43) Date of publication of application: 29.12.2010
(73) Proprietor: Nokia Solutions and Networks Oy, 02610 Espoo (FI)
(72) Inventor: PYYKKÖNEN, Jarkko, FIN-91410 Jokirinne Muhos (FI)
(74) Representative: Ruuskanen, Juha-Pekka
(86) International application number: PCT/EP2008/053405
(87) International publication number: WO 2009/115126

(56) References cited:
- US-A1- 2008 049 783
- 3GPP: "3rd Generation Partnership Project;Technical Specification Group GERAN;A-interface over IP Study (AINTIP);(Release 8)" 3GPP DRAFT; GP-080414 TR 43903-100 CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_sa\WG4_CODEC\TSGS4_48\Docs, no. Jeju Island; 20080407, 22 February 2008 (2008-02-22), XP050289909
- "3GPP TS 29.232 V8.1.0 Media Gateway Controller (MGC) - Media Gateway (MGW) interface; Stage 3 (Release 8)" INTERNET ARTICLE, [Online] December 2007 (2007-12), pages 1-140, XP002511282 Retrieved from the Internet: URL:http://www.3gpp.org/ftp/Specs/archive/ 29_series/29.232/29232-810.zip> [retrieved on 2009-01-21]

## Description

### FIELD OF THE INVENTION

The present invention relates to a communication network system having different IP interfaces. In particular, the invention relates to a packet-switched core network which is used to connect different access networks to each other.

### BACKGROUND OF THE INVENTION

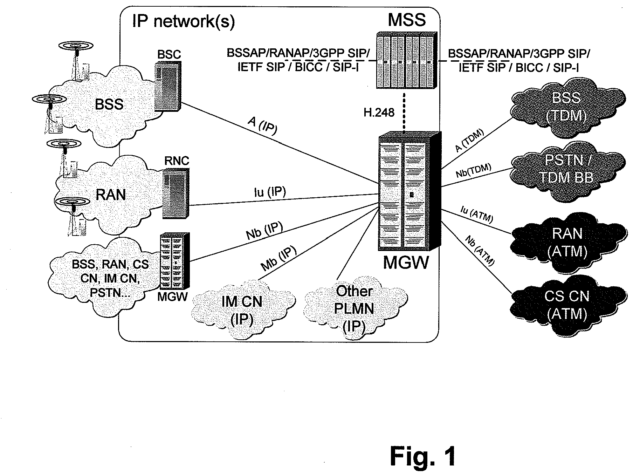

In mobile networks, e.g. networks according to 3GPP Rel4 (Third Generation Partnership Project Release 4) architecture as shown in Fig. 1, a core network, e.g. an MSC (Mobile Switching Centre) server system, is used to connect different access networks to each other.

In Rel4 networks, MSC functionality is split into two logical functions, which typically are provided by physically separate network elements, namely a Media Gateway (MGW) and an MSC server. Control functions of the MSC are provided by the MSC server. Bearer switching functions of the MSC are provided by the MGW.

As shown in Fig. 1, the MGW provides different user plane interfaces A, Iu, Nb and Mb, which are based on TDM (Time Division Multiplex), ATM (Asynchronous Transfer Mode) or IP (Internet Protocol) transmission technology.

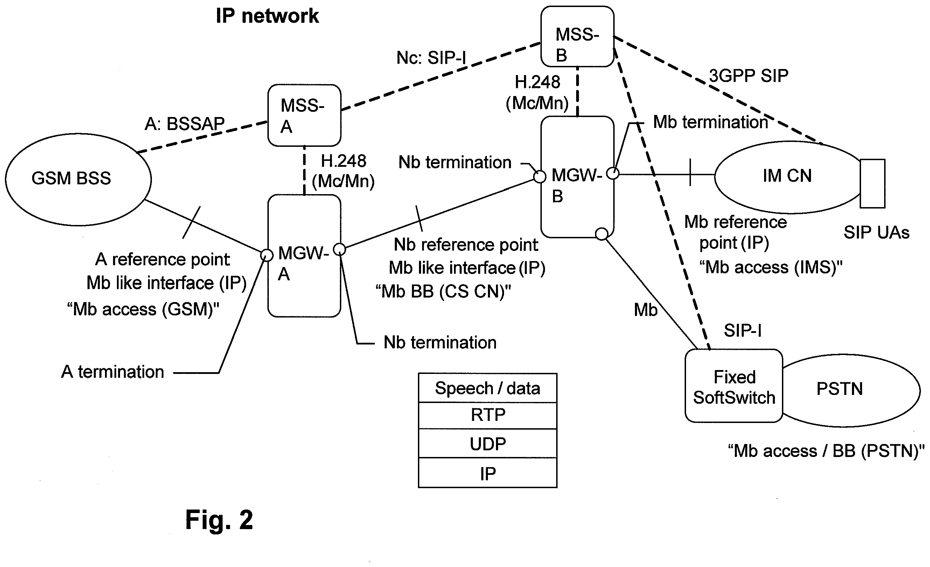

Fig. 2 shows the usage of an IP (Internet Protocol) in 3GPP Rel4 architecture in greater detail. Generally, today's general trend is to use IP transmission as widely as possible. For example, an IM CN (IP Multimedia Core Network) comprising SIP UAs (User Agents) communicates with an MSS-B using 3GPP SIP (Session Initiation Protocol) (IP interface), and with an MGW-B via an Mb interface (Mb reference point, IP interface, "Mb access (IMS (IP Multimedia Subsystem))").

As further shown in Fig. 2, based on 3GPP AoIP work item a GSM BSS (Global System for Mobile communication Base Station System) communicates with an MSS-A via an A interface based on BSSAP (Base Station System Application Part) signaling, and with an MGW-A via an A interface (A reference point) which is an Mb like interface (IP interface, "Mb access (GSM)").

In addition, as shown in Fig. 2 the fixed networks can be connected to mobile networks via Fixed SoftSwitch by using the SIP-I (SIP-Integrated service digital network user part) as call control protocol, and an Mb interface to transport the user plane traffic ("Mb access / BB (Backbone) (PSTN)") .

In addition, the SIP-I can be used as CS CN (circuit switched core network) call control protocol, that is between MSC servers, when communication between the MGW-A and the MGW-B is performed via an Nb interface (Nb reference point) which is an Mb like interface (IP interface, "Mb BB (CS (Circuit Switched) CN)").

Generally communication between the MSC servers (MSS) and Multimedia gateways (MGW) is performed via IP based on Mc/Mn interface based on H.248 protocol.

In IP based interfaces, the MGW (MGW-A, MGW-B) transports user traffic such as speech and data on the top of RTP (Real time Transport Protocol), UDP (User Datagram Protocol), IP (internet protocol) protocol stack.

A problem associated with the above IP network is that the MGW cannot separate the A, Nb and Mb terminations shown in Fig. 2 from each other. That affects on the MGW call handling capacity and restricts flexible usage of certain functionalities.

Due to the Nc interface based on SIP-I protocol and A interface over IP (AoIP), there are three different reference points (Mb, A and Nb) whose termination reservation/modification via H.248 interface is done in the same way. Thus, the MGW cannot know the type of reference point of the reserved IP termination.

As a result, the MGW is not able to provide an appropriate set of services per interface type, for instance:
- Speech enhancement functions, like AEC (Automatic Echo Cancellation), ALC (Automatic Level Control), NS (Noise Suppression) are needed in A/Mb interface, but not in Nb.
- DTMF (Dual Tone Multi-Frequency) delivery over RTP is needed in Mb/Nb interfaces but not in A interface.
- Fax/modem tone delivery over RTP is needed in Mb/Nb interfaces but not in A interface.
- Fax/modem tone detection functionality is needed in Mb interface but not in A and Nb interfaces.
- Dynamic RTCP (Real time Transport Control Protocol) control can be used in context of Mb and Nb interfaces but not in A interface, since SIP control is required for dynamic RTCP.
- Different set of speech codecs/data payload formats are needed to be supported in A and Mb/Nb interfaces.

Moreover, not knowing the type of reference point of the reserved IP termination, the MGW is not able to provide proper statistical information.

Thus, if no separation of IP interfaces is available all services have to be supported in all interfaces in the same way which causes reservation of lots of resources in the MGW. In addition this causes an unnecessary complexity of the MGW.

3GPP TS29.232 V8.1.0 describes a protocol to be used on the Media Gateway Controller (MGC) - Media Gateway (MGW) interface, and describes changes to H.248 for handling 3GPP specific traffic cases.

### SUMMARY OF THE INVENTION

The invention aims at solving the above-described problems.

There is hereby provided an apparatus according to claim 1, a method according to claim 7, and a computer program product according to claim 13.

According to an embodiment of the invention, a control apparatus, such as an MSS, determines a user plane interface type, such as a termination/reference point type, via which a call is to be processed, indicates the user plane interface type in a termination reservation message and transmits the termination reservation message. A gateway apparatus, such as an MGW, receives the termination reservation message, determines the user plane interface type from the termination reservation message and performs processing in accordance with the user plane interface type.

According to embodiments of the present invention, different IP terminations/reference points in a network communication system, e.g. an MSC server system, can be separated from each other.

With embodiments of the present invention the following advantages can be achieved.

Usage of MGW resources can be optimized. The MGW can provide the services which are required for the termination/reference point in question. This increases MGW call handling capacity.

Moreover, it is possible to provide statistical information per reference point.

Furthermore, it is possible to define A/Nb/Mb interface specific features. Different sets of features may be required in different interfaces. With the invention, features (e.g. RTCP) can be utilized by the MGW in a specific way in accordance with a specific interface.

In addition, it is possible to determine an IP port capacity of the MGW and features of the MGW per reference point. The present invention makes the communication network system, in particular the MSC server system, more simple and more reliable what results in less implementation and maintenance effort.

### BRIEF DESCRIPTION OF THE DRAWINGS

Fig. 1 shows a schematic diagram illustrating a network architecture according to 3GPP Rel4.
Fig. 2 shows a schematic diagram illustrating an IP network according to 3GPP Rel4.
Fig. 3 shows a schematic diagram illustrating IP interface separation in an IP network according to an embodiment of the invention.
Fig. 4 shows a schematic diagram illustrating IP interface separation in an IP network according to an embodiment of the invention.
Fig. 5 shows a schematic diagram illustrating IP interface separation in an IP network according to an embodiment of the invention.
Fig. 6 shows a schematic diagram illustrating IP interface separation in an IP network according to an embodiment of the invention.
Fig. 7 shows a schematic block diagram illustrating a configuration of a control apparatus and a gateway apparatus according to an embodiment of the invention.

### DESCRIPTION OF THE EMBODIMENTS OF THE INVENTION

In the following the invention will be described by way of embodiments thereof with reference to the accompanying drawings which form part of the specification.

For the purpose of the present invention to be described herein below, it should be noted that
- a network device can act as a client entity or as a server entity in terms of the present invention, or may even have both functionalities integrated therein;
- method steps likely to be implemented as software code portions and being run using a processor at one of the server / client entities are software code independent and can be specified using any known or future developed programming language;
- method steps and/or devices likely to be implemented as hardware components at one of the server / client entities are hardware independent and can be implemented using any known or future developed hardware technology or any hybrids of these, such as MOS, CMOS, BiCMOS, ECL, TTL, etc, using for example ASIC components or DSP components, as an example;
- generally, any method step is suitable to be implemented as software or by hardware without changing the idea of the present invention;
- devices can be implemented as individual devices, but this does not exclude that they are implemented in a distributed fashion throughout the system, as long as the functionality of the device is preserved.

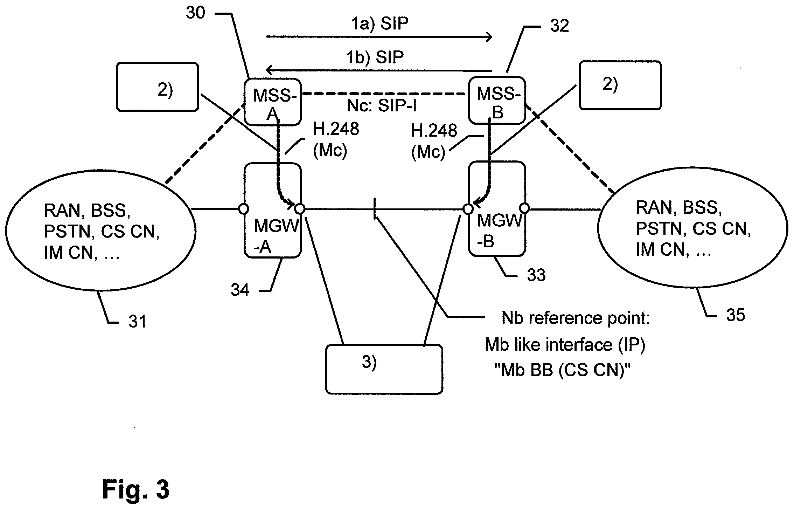

According to an embodiment of the invention, an MSC Server (MSS) determines a type of reference point (user plane interface type) in an IP network shown in Fig. 2 as described in the following by referring to Figs. 3-6.

According to Fig. 3, the MSS determines an Nb reference point when SIP-I is used in an Nc interface between MSSs what will be described in the following.

After an MSS-A (MSC server A) 30 has received a call setup request from a preceding network, it initiates a SIP (SDP (Session Datagram Protocol) offer/answer) negotiation towards an MSS-B (MSC server B) 32. In a first SIP-I message of the negotiation (communication 1a), the MSS-A 30 includes information indicating that "sender of this message is MSS".

When the MSS-B 32 receives that message it notices that SIP-I communication is received from another MSS. Therefore, the MSS-B 32 determines that on the user plane a counterpart of an MGW-B (Media Gateway B) 33 is another MGW and, thus, the reference point between MGWs is Nb.

The MSS-A 30 may notice that on the user plane a counterpart of an MGW-A (Media Gateway A) 34 is another MGW after it has received a response message from the MSS-B 32 (communication 1b).

It is to be noted that the above-described SIP-I interface indication "the sender of this message is MSS" can be implemented in different ways. It is also possible that the MSS (MSS-A, MSS-B) acquires the required information about "whether the SIP-I (offer/answer) message is received from an MSS or some other network element" in another way.

In a termination reservation phase, the MSS-A 30 informs the type of reference point to the MGW-A 34 via an Mc interface based on H.248 protocol (communication 2 in Fig. 3) and the MSS-B 32 informs the type of reference point to the MGW-B 33 via an Mc interface based on H.248 protocol (communication 2 in Fig. 3), by using an IPUP package with a reference point value "Nb". The IPUP package will be described in greater detail below.

Based on the informed type of reference point, the MGW-A 34 and the MGW-B 33 can perform appropriate resource reservation (procedure 3 in Fig. 3). For example, for the Nb reference point which is an Mb like interface (IP interface, "Mb BB (CS CN)"), no speech enhancement functions, no fax/modem tone detection functions, etc. are activated.

It is to be noted that in intra-MSS cases the MSS has to provide similar H.248 information as described above to the MGWs (MGW-A, MGW-B) if Mb-like user plane is to be used between the MGWs.

Fig. 3 further shows a connection between an access network / core network 31 and the MSS-A 30 and the MGW-A 34, and a connection between an access network / core network 35 and the MSS-B 32 and the MGW-B 33.

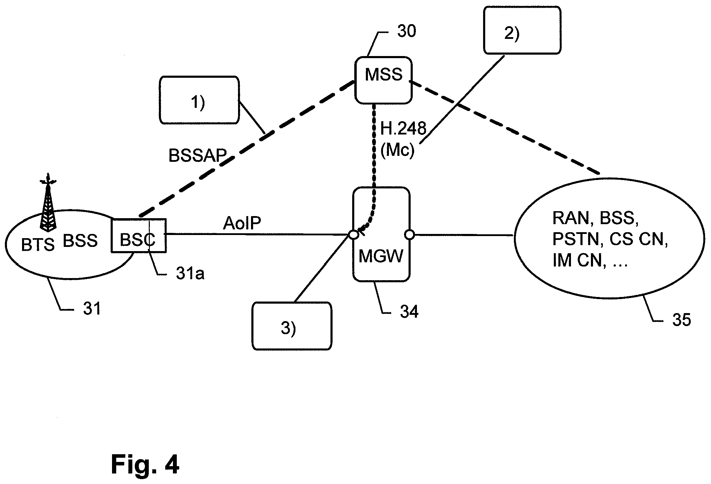

According to Fig. 4, the MSS determines an A reference point when IP can be used as A interface transport (AoIP) between a BSC (Base station Controller) and an MGW what will be described in the following.

Based on an A interface control plane signalling (BSSAP / BSSMAP) (communication 1 in Fig. 4) received from a BSC 31a of the access network 31, the MSS 30 determines when "AoIP termination" has to be reserved in the MGW 34.

In the termination reservation phase, the MSS 30 informs the type of reference point to the MGW 34 via the Mc interface based on H.248 protocol by using an IPUP package with a reference point value "A" (communication 2 in Fig. 4) .

Based on the informed type of reference point, the MGW-A 34 can perform appropriate resource reservation (procedure 3 in Fig. 4) for the AoIP interface between the BSC 31a and the MGW 34.

Fig. 4 further shows a connection between the access network / core network 35 and the MSS-A 30 and the MGW-A 34.

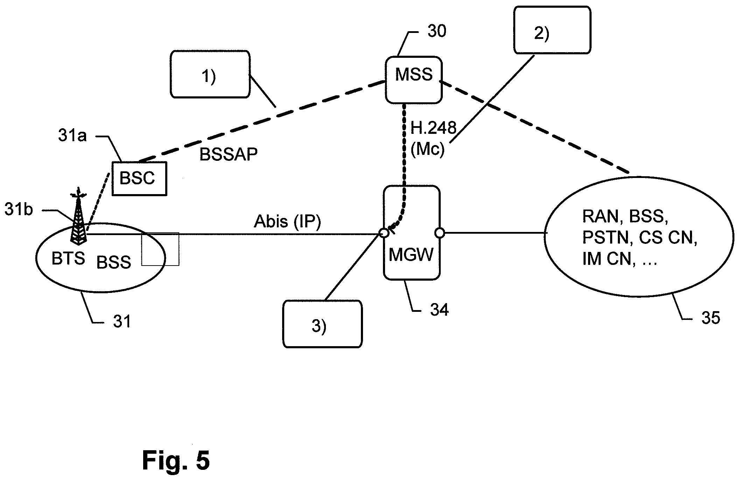

According to Fig. 5, the MSS may determine an Abis reference point when an IP based Abis interface is connected directly from a BTS (Base Transceiver Station) to an MGW what will be described in the following.

Based on an A interface control plane signalling (communication 1 in Fig. 5) received from the BSC 31a of the access network 31, the MSS 30 may determine when an IP based Abis interface is to be used between a BTS 31b of the access network 31 and the MGW 34.

In the termination reservation phase, the MSS 30 informs the type of reference point to the MGW 34 via the Mc interface based on H.248 protocol by using an IPUP package with reference point value "Abis" (communication 2 in Fig. 5) .

Based on the informed type of reference point, the MGW 34 performs appropriate resource reservation and provides the functionalities needed in Abis termination (procedure 3 in Fig. 5).

Fig. 5 further shows a connection between the access network / core network 35 and the MSS-A 30 and the MGW-A 34.

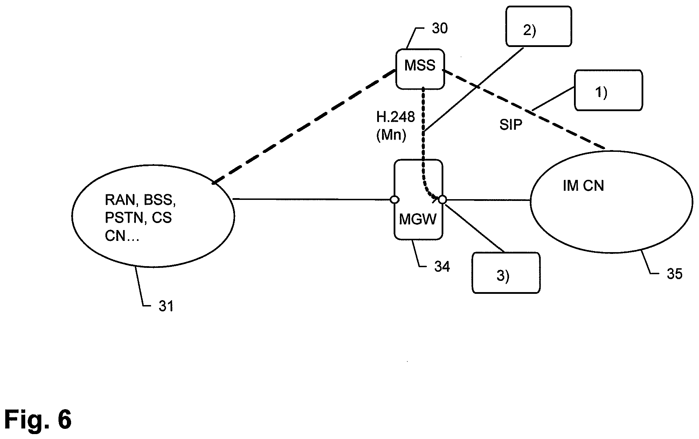

According to Fig. 6, the MSS may determine an Mb reference point when SIP is used as a call control protocol towards IM CN.

Based on a SIP signalling (communication 1 in Fig. 6) the MSS 30 may determine when an Mb reference point is to be used between the IM CN 35 and the MGW 34.

In the termination reservation phase, the MSS 30 may inform the type of reference point to the MGW 34 via the Mn interface based on H.248 protocol by using an IPUP package with reference point value "Mb" (communication 2 in Fig. 6). Alternatively, no IPUP package with Mb reference indication is sent.

Based on the informed type of reference point or when no IPUP package is received in termination reservation phase, the MGW 34 performs appropriate resource reservation for the Mb interface (procedure 3 in Fig. 6).

Fig. 6 further shows a connection between the access network / core network 31 and the MSS-A 30 and the MGW-A 34.

In the following a package used by the MSS according to an embodiment of the invention to indicate to the MGW the type of reference point of the interface, which is IP based and where NbUP (Nb User Plane) framing protocol is not used, will be described. According to an embodiment of the invention, this package is an H.248 package which may be called IPUP package or internet protocol up package.

**IPUP package.**

| | |
|---|---|
| PackageID: | ipup (0x00xx) /* *packageID shall be reserved from IANA* */ |
| Version: | 1 |
| Extends: | None |

This package identifies the type of IP interface reference point.

### Properties

### Reference point:

PropertyID: referencepoint (0x0001).
Description: Indicates the type of reference point of interface which is IP based and where NbUP framing protocol is not used.
Type: Enumeration.
Possible Values:
   - "Mb" (0x0001) (IP) Mb interface reference point.
   - "Nb" (0x0002) (IP) Nb interface reference point.
   - "A" (0x0003) (IP) A interface reference point.
   - "Abis" (0x004) (IP) Abis interface reference point.
   - Other values may be reserved for future use.
Default: "Mb" (0x0001) (IP) Mb interface reference point.
Defined in: Local Control descriptor.
Characteristics: Read/Write.

### Events

None.

### Signals

None.

### Statistics

None.

### Procedures

The MSS (MGC / MGCF) uses this package to indicate to the MGW the type of reference point of interface which is IP based and where NbUP framing protocol is not used (that is the interface where speech / data is transported directly over RTP). It is to be noted that in the case of Mb interface termination, it is not mandatory to indicate the type of reference point. Therefore, when ipup package is missing, e.g. in the reservation of "Mb-like" termination, the MGW should handle the termination reservation in the same way as if ipup package with "Mb" indication was received.

This package may be sent from the MSS to the MGW in the context of following procedures:
- optionally in reservation / modification of Mb interface reference point: Reserve IMS RTP Connection Point, Configure IMS Resources and Reserve IMS Connection Point and configure remote resources procedures.
- reservation / modification of Nb and A interface reference points - no NbUP: Reserve RTP Connection Point, Configure RTP Resources and Reserve RTP Connection Point and configure remote resources procedures.

The MGW uses this information to provide an appropriate set of services required in certain interface (reference point) and in this way can optimize speech quality and its resources usage.

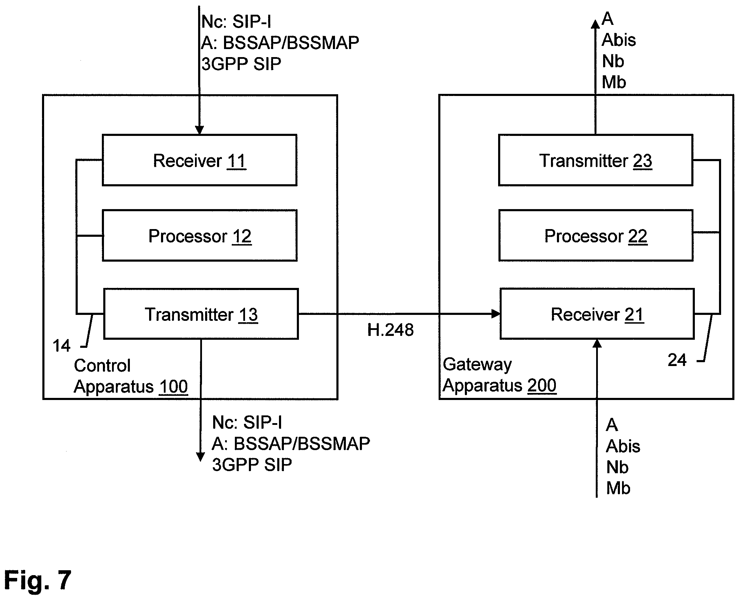

Fig. 7 shows a schematic block diagram illustrating a configuration of a control apparatus 100 such as an MSS and a gateway apparatus 200 such as an MGW according to an embodiment of the invention.

The control apparatus 100 comprises a receiver 11, a processor 12 and a transmitter 13, which are interconnected via a bus 14. The gateway apparatus 200 comprises a receiver 21, a processor 22 and a transmitter 23, which are interconnected via a bus 24.

The control apparatus 100 and the gateway apparatus 200 may be connected to each other using H.248 protocol. The control apparatus 100 is also able to communicate with other network elements using SIP-I, BSSAP/BSSMAP and 3GPP SIP, for example. The gateway apparatus 200 is also able to communicate with other network elements via A, Abis, Nb and Mb interfaces, for example.

The processor 12 of the control apparatus 100 determines a user plane interface type (reference point type) via which a call is to be processed, indicates the user plane interface type in a termination reservation message and causes the transmitter 13 via the bus 14 to transmit the termination reservation message.

The processor 12 may determine the user plane interface type from a control plane signaling message associated with the call, which has been received by the receiver 11.

The control plane signaling message may comprise at least one of a call setup request message, a negotiation initiation message and a negotiation response message. The negotiation initiation message and the negotiation response message each may comprise a session initiation protocol integrated service digital network user part protocol (SIP-I) message, and the call setup request message may comprise at least one of a base station system application part protocol (BSSAP) / BSSMAP (A interface control plane signalling) message and session initiation protocol (SIP) message.

The processer 12 may indicate the user plane interface type in a package with a reference point value corresponding to the user plane interface type and cause the transmitter 13 via the bus 14 to transmit the termination reservation message comprising the package. The package may be a H.248 package and may be called IPUP package or internet protocol up package.

The processor 12 may indicate the control apparatus 100 as a sender in a negotiation initiation message in reaction to a call setup request message received by the receiver 11 and cause the transmitter 13 via the bus 14 to transmit the negotiation initiation message.

Furthermore, the processor 12 may indicate the control apparatus 100 as a sender in a negotiation response message in reaction to a negotiation initiation message received by the receiver 11 and cause the transmitter 13 via the bus 14 to transmit the negotiation response message.

The transmitter 13 may transmit the reservation termination message using H.248 protocol. This H.248 message may be sent in a Reserve RTP Connection Point procedure, Configure RTP Resources procedure and/or a Reserve RTP Connection Point and configure remote resources procedure.

In turn, the processor 22 of the gateway apparatus 200 determines a user plane interface type (reference point type) from a termination reservation message received by the receiver 21 e.g. from the transmitter 13 of the control apparatus 100, and performs processing in accordance with the user plane interface type.

The processer 22 may determine the user plane interface type from a reference point value indicated in a package included in the termination reservation message. The package may be a H.248 package and may be called IPUP package or internet protocol up package.

The receiver 21 may receive the reservation termination message using H.248 protocol.

The processor 22 may reserve resources in accordance with the user plane protocol type, and may provide specific services in accordance with the user plane protocol type.

It is to be noted that the apparatuses shown in Fig. 7 may have further functionality for working e.g. as MSS and MGW. Here the functions of the apparatuses relevant for understanding the principles of the invention are described by referring to the configuration shown in Fig. 7 as an embodiment of the invention.

It is to be understood that the above description is illustrative of the invention and is not to be construed as limiting the invention. Various modifications and applications may occur to those skilled in the art without departing from the scope of the invention as defined by the appended claims.

## Claims

1. An apparatus (100) for use at a mobile switching center server, comprising:
means for determining a type of a user plane interface via which a call is to be processed, the user plane interface being an internet protocol based interface where data is transported on top of Real-Time Transport Protocol;
means for indicating the type of the user plane interface in a package with a reference point value corresponding to one of Mb, A, and Nb interfaces, the package being comprised in a termination reservation message, and
means for transmitting (13) the termination reservation message to a media gateway (200).

2. The apparatus of claim 1, further comprising:
means for receiving a control plane signaling message associated with the call, and
wherein the means for determining the type of the user plane interface is determining the type of the user plane interface from the control plane signaling message.

3. The apparatus of claim 2, wherein the control plane signaling message comprises at least one of a call setup request message, a negotiation initiation message and a negotiation response message.

4. The apparatus of claim 1, further comprising
means for receiving a call setup request message, and
means for indicating the mobile switching center server as a sender in a negotiation initiation message in reaction to the call setup request message, and means for transmitting the negotiation initiation message.

5. The apparatus of claim 1, further comprising:
means for receiving a negotiation initiation message, and
means for indicating the mobile switching center server as a sender in a negotiation response message in reaction to the negotiation initiation message, and means for transmitting the negotiation response message.

6. The apparatus of claim 1, wherein the means for transmitting the reservation termination message is transmitting the reservation termination message using H.248 protocol.

7. A method comprising, in a mobile switching center server:
determining a type of a user plane interface via which a call is to be processed, the user plane interface being an internet protocol based interface where data is transported on top of Real-Time Transport Protocol;
indicating the type of the user plane interface in a package with a reference point value corresponding to one of Mb, A, and Nb interfaces, the package being comprised in a termination reservation message, and
transmitting the termination reservation message to a media gateway.

8. The method of claim 7, further comprising, in the mobile switching center server:
receiving a control plane signaling message associated with the call, and
determining the internet protocol based user plane interface type from the control plane signaling message.

9. The method of claim 7, wherein the control plane signaling message comprises at least one of a call setup request message, a negotiation initiation message and a negotiation response message.

10. The method of claim 7, further comprising, in the mobile switching center server:
receiving a call setup request message, and
indicating, in a negotiation initiation message to be transmitted in reaction to the call setup request message, an apparatus by which the negotiation initiation message is to be transmitted, as a sender of the negotiation initiation message, and
transmitting the negotiation initiation message.

11. The method of claim 7, further comprising, in the mobile switching center server:
receiving a negotiation initiation message,
indicating, in a negotiation response message to be transmitted in reaction to the negotiation initiation message, an apparatus by which the negotiation response message is to be transmitted as a sender of the negotiation response message, and
transmitting the negotiation response message.

12. The method of claim 7, further comprising, in the mobile switching center server: transmitting the reservation termination message using H.248 protocol.

13. A computer program product including a program for a processing device, comprising software code portions for performing all steps of a method according to any one of claims 7 to 12 when the program is run on the processing device.

## Patentansprüche

1. Vorrichtung (100) zur Verwendung an einem mobilen Vermittlungszentralen-Server, umfassend:
Mittel zum Bestimmen eines Typs einer Nutzerebenen-Oberfläche, über die ein Anruf verarbeitet werden soll, wobei die Nutzerebenen-Oberfläche eine Internetprotokoll-basierte Oberfläche ist, wobei Daten über das Echtzeit-Transportprotokoll transportiert werden;
Mittel zum Angeben des Typs der Nutzerebenen-Oberfläche in einem Paket mit einem Referenzpunktwert, der der Mb- oder der A- oder der Nb-Schnittstelle entspricht, wobei das Paket in einer Abschlussreservierungsmeldung umfasst ist, und
Mittel zum Senden (13) der Abschlussreservierungsmeldung zu einem Medien-Netzübergang (200).

2. Vorrichtung nach Anspruch 1, weiter umfassend:
Mittel zum Empfangen einer dem Anruf zugeordneten Steuerebenen-Signalisierungsmeldung, und
wobei die Mittel zum Bestimmen des Typs der Nutzerebenen-Oberfläche den Typ der Nutzerebenen-Oberfläche aus der Steuerebenen-Signalisierungsmeldung bestimmen.

3. Vorrichtung nach Anspruch 2, wobei die Steuerebenen-Signalisierungsmeldung eine Anrufeinrichtungs-Anforderungsmeldung und/oder eine Verhandlungseinleitungsmeldung und/oder eine Verhandlungsantwortmeldung umfasst.

4. Vorrichtung nach Anspruch 1, weiter umfassend
Mittel zum Empfangen einer Anrufeinrichtungs-Anforderungsmeldung, und
Mittel zum Angeben des mobilen Vermittlungszentralen-Servers als Absender in einer Verhandlungseinleitungsmeldung als Reaktion auf die Anrufeinrichtungs-Anforderungsmeldung, und Mittel zum Senden der Verhandlungseinleitungsmeldung.

5. Vorrichtung nach Anspruch 1, weiter umfassend:
Mittel zum Empfangen einer Verhandlungseinleitungsmeldung, und
Mittel zum Angeben des mobilen Vermittlungszentralen-Servers als Absender in einer Verhandlungsantwortmeldung als Reaktion auf die Verhandlungseinleitungsmeldung, und Mittel zum Senden der Verhandlungsantwortmeldung.

6. Vorrichtung nach Anspruch 1, wobei die Mittel zum Senden der Reservierungsabschlussmeldung die Reservierungsabschlussmeldung unter Verwendung des H.248-Protokolls senden.

7. Verfahren, in einem mobilen Vermittlungszentralen-Server umfassend:
Bestimmen eines Typs einer Nutzerebenen-Oberfläche, über die ein Anruf verarbeitet werden soll, wobei die Nutzerebenen-Oberfläche eine Internetprotokoll-basierte Oberfläche ist, wobei Daten über das Echtzeit-Transportprotokoll transportiert werden;
Angeben des Typs der Nutzerebenen-Oberfläche in einem Paket mit einem Referenzpunktwert, der der Mb- oder der A- oder der Nb-Schnittstelle entspricht, wobei das Paket in einer Abschlussreservierungsmeldung umfasst ist, und
Senden der Abschlussreservierungsmeldung zu einem Medien-Netzübergang.

8. Verfahren nach Anspruch 7, im mobilen Vermittlungszentralen-Server weiter umfassend:
Empfangen einer dem Anruf zugeordneten Steuerebenen-Signalisierungsmeldung, und
Bestimmen des Typs der Internetprotokoll-basierten Nutzerebenen-Oberfläche aus der Steuerebenen-Signalisierungsmeldung.

9. Verfahren nach Anspruch 7, wobei die Steuerebenen-Signalisierungsmeldung eine Anrufeinrichtungs-Anforderungsmeldung und/oder eine Verhandlungseinleitungsmeldung und/oder eine Verhandlungsantwortmeldung umfasst.

10. Verfahren nach Anspruch 7, im mobilen Vermittlungszentralen-Server weiter umfassend:
Empfangen einer Anrufeinrichtungs-Anforderungsmeldung, und
in einer als Reaktion auf die Anrufeinrichtungs-Anforderungsmeldung zu sendenden Verhandlungseinleitungsmeldung: Angeben einer Vorrichtung, durch die die Verhandlungseinleitungsmeldung gesendet werden soll, als Sender der Verhandlungseinleitungsmeldung, und
Senden der Verhandlungseinleitungsmeldung.

11. Verfahren nach Anspruch 7, im mobilen Vermittlungszentralen-Server weiter umfassend:
Empfangen einer Verhandlungseinrichtungsmeldung, und
in einer als Reaktion auf die Verhandlungseinleitungsmeldung zu sendenden Verhandlungsantwortmeldung: Angeben einer Vorrichtung, durch die die Verhandlungsantwortmeldung gesendet werden soll, als Sender der Verhandlungsantwortmeldung, und
Senden der Verhandlungsantwortmeldung.

12. Verfahren nach Anspruch 7, im mobilen Vermittlungszentralen-Server weiter umfassend: Senden der Reservierungsabschlussmeldung unter Verwendung des H.248-Protokolls.

13. Computerprogrammprodukt, umfassend ein Programm für eine Verarbeitungseinrichtung, umfassend Softwarecode-Abschnitte zum Durchführen aller Schritte eines Verfahrens gemäß einem der Ansprüche 7-12, wenn das Programm auf der Verarbeitungseinrichtung ausgeführt wird.

## Revendications

1. Appareil (100) destiné à être utilisé au niveau d'un serveur de centre de commutation du service des mobiles, comprenant :
un moyen pour déterminer un type d'interface de plan d'utilisateur par le biais de laquelle un appel doit être traité, l'interface de plan d'utilisateur étant une interface basée sur le protocole Internet où des données sont transportées sur la partie supérieure du protocole de transport en temps réel ;
un moyen pour indiquer le type d'interface de plan d'utilisateur dans un progiciel avec une valeur de point de référence correspondant à l'une des interfaces Mb, A et Nb, le progiciel étant inclus dans un message de réservation de terminaison, et
un moyen pour transmettre (13) le message de réservation de terminaison à une passerelle multimédia (200) .

2. Appareil selon la revendication 1, comprenant en outre :
un moyen pour recevoir un message de signalisation de plan de commande associé à l'appel et
dans lequel le moyen pour déterminer le type d'interface de plan d'utilisateur détermine le type d'interface de plan d'utilisateur à partir du message de signalisation de plan de commande.

3. Appareil selon la revendication 2, dans lequel le message de signalisation de plan de commande comprend un message de demande d'établissement d'appel et/ou un message d'initiation de négociation et/ou un message de réponse de négociation.

4. Appareil selon la revendication 1, comprenant en outre
un moyen pour recevoir un message de demande d'établissement d'appel et
un moyen pour indiquer le serveur de centre de commutation du service des mobiles en tant qu'expéditeur dans un message d'initiation de négociation en réaction au message de demande d'établissement d'appel, et un moyen pour transmettre le message d'initiation de négociation.

5. Appareil selon la revendication 1, comprenant en outre :
un moyen pour recevoir un message d'initiation de négociation et
un moyen pour indiquer le serveur de centre de commutation du service des mobiles en tant qu'expéditeur dans un message de réponse de négociation en réaction au message d'initiation de négociation, et un moyen pour transmettre le message de réponse de négociation.

6. Appareil selon la revendication 1, dans lequel le moyen pour transmettre le message de résiliation de réservation transmet le message de résiliation de réservation à l'aide du protocole H.248.

7. Procédé comprenant dans un serveur de centre de commutation du service des mobiles :
la détermination d'un type d'interface de plan d'utilisateur par le biais de laquelle un appel doit être traité, l'interface de plan d'utilisateur étant une interface basée sur le protocole Internet où des données sont transportées sur la partie supérieure du protocole de transport en temps réel ;
l'indication du type d'interface de plan d'utilisateur dans un progiciel avec une valeur de point de référence correspondant à l'une des interfaces Mb, A et Nb, le progiciel étant inclus dans un message de réservation de terminaison, et
la transmission du message de réservation de terminaison à une passerelle multimédia.

8. Procédé selon la revendication 7, comprenant en outre, dans le serveur de centre de commutation du service des mobiles :
la réception d'un message de signalisation de plan de commande associé à l'appel et
la détermination du type d'interface de plan d'utilisateur basée sur le protocole Internet à partir du message de signalisation de plan de commande.

9. Procédé selon la revendication 7, dans lequel le message de signalisation de plan de commande comprend un message de demande d'établissement d'appel et/ou un message d'initiation de négociation et/ou un message de réponse de négociation.

10. Procédé selon la revendication 7, comprenant en outre, dans le serveur de centre de commutation du service des mobiles :
la réception d'un message de demande d'établissement d'appel et
l'indication, dans un message d'initiation de négociation qui doit être transmis en réaction au message de demande d'établissement d'appel, d'un appareil au moyen duquel le message d'initiation de négociation doit être transmis, en tant qu'expéditeur du message d'initiation de négociation, et
la transmission du message d'initiation de négociation.

11. Procédé selon la revendication 7, comprenant en outre, dans le serveur de centre de commutation du service des mobiles :
la réception d'un message d'initiation de négociation,
l'indication, dans un message de réponse de négociation qui doit être transmis en réaction au message d'initiation de négociation, d'un appareil au moyen duquel le message de réponse de négociation doit être transmis, en tant qu'expéditeur du message de réponse de négociation, et
la transmission du message de réponse de négociation.

12. Procédé selon la revendication 7, comprenant en outre, dans le serveur de centre de commutation du service des mobiles : la transmission du message de résiliation de réservation à l'aide du protocole H.248.

13. Produit-programme d'ordinateur comprenant un programme pour un dispositif de traitement, comprenant des parties de code de logiciel pour réaliser toutes les étapes d'un procédé selon l'une quelconque des revendications 7 à 12 lorsque le programme est exécuté sur le dispositif de traitement.
